# EUROPEAN PATENT APPLICATION

(11) **EP 1 916 830 A1**
(43) Date of publication of application: **30.04.2008**
(21) Application number: 07007591.6
(22) Date of filing: 13.04.2007
(51) Int. Cl.: H04M 1/725, H04M 1/60

(54) **Method of controlling printer using bluetooth function of mobile terminal**

(30) Priority: 12.10.2006 KR 20060099103
(71) Applicant: Samsung Electronics Co., Ltd., Suwon-si, Gyeonggi-Do (KR)
(72) Inventor: Joo, Young Seoung, Suwon-si Gyeonggi-do (KR)
(74) Representative: Boakes, Jason Carrington

(57) **Abstract**

A method of controlling a printer using a Bluetooth function of a mobile terminal is provided, including forming, when printing is to be performed, a Bluetooth communication link between the mobile terminal and a headset and forming a communication link between the headset and the printer; selecting data to be printed, using the mobile terminal; setting a print format, using the mobile terminal, transmitting the print format to the headset, transmitting the print format from the headset to the printer, and setting the print format as a print format of the printer; and transmitting the selected data from the mobile terminal to the headset and printing the data received through the headset with the set format.

## Description

### BACKGROUND OF THE INVENTION

### 1. Field of the Invention

The present invention relates to a method of controlling a printer using a Bluetooth function of a mobile terminal, and, more particularly, to a method of controlling a printer using a Bluetooth^{®} ("Bluetooth") function of a mobile terminal that can output data of the mobile terminal to the printer by connecting a headset that can perform Bluetooth communication and having a Bluetooth dongle function to the printer.

### 2. Description of the Related Art

Nowadays, additional functions provided in a mobile terminal are being rapidly developed, such as an MP3 player, navigation using a Global Positioning System (GPS), and Bluetooth. A function that has been highly spotlighted among the additional functions is Bluetooth. It is possible to conveniently perform communication through a mobile terminal or listen to music stored in the mobile terminal using a headset without a wire connector or connection line of the headset by connecting the mobile terminal and headset using wireless Bluetooth protocol.

Further, data communication between the mobile terminal and other appliances can be conveniently performed by providing a Bluetooth module in the other appliances, as well as in the headset.

In the related art, in order to print data stored in the mobile terminal, the mobile terminal and printer are connected using a USB device, or using Bluetooth communication by providing the Bluetooth module in the printer. However, in the former case, the data of the mobile terminal cannot be printed without the USB device. In the latter case, if the Bluetooth module is not provided in the printer, the data cannot be printed.

### SUMMARY OF THE INVENTION

The present invention solves the above problems, and an aspect of the present invention is to provide a method of controlling a printer not having a Bluetooth module by a mobile terminal that can perform Bluetooth communication.

Another aspect of the present invention is to provide a method of performing a Bluetooth dongle function by providing a USB device in a headset that can perform Bluetooth communication.

Another aspect of the present invention is to provide a method of enabling a mobile terminal and printer to perform Bluetooth communication by connecting a headset for performing a Bluetooth dongle function to the printer.

In accordance with an aspect of the present invention, the above and other objects are accomplished by a method of controlling a printer using a Bluetooth function of a mobile terminal, including forming a Bluetooth communication link between a mobile terminal having a Bluetooth communication function and a printer to which a headset for performing a dongle function is connected; selecting data to be printed; setting a print format for the selected data and transmitting the print format to the headset in order to transmit the print format to the printer; and transmitting the selected data to the headset in order to transmit the selected data to the printer.

In accordance with another aspect of the present invention, the above and other objects are accomplished by a method of controlling a printer using a Bluetooth function of a mobile terminal, including selecting data to be printed; forming a Bluetooth communication link between a mobile terminal having a Bluetooth communication function and a printer to which a headset for performing a dongle function is connected; setting a print format for the selected data and transmitting the print format to the headset in order to transmit the print format to the printer; and transmitting the selected data to the headset in order to transmit the selected data to the printer.

In accordance with another aspect of the present invention, the above and other objects are accomplished by a method of controlling a printer using a Bluetooth function of a mobile terminal, including forming, when printing is to be performed, a Bluetooth communication link between the mobile terminal and a headset and forming a communication link between the headset and the printer; selecting data to be printed, using the mobile terminal; setting a print format, using the mobile terminal, transmitting the print format to the headset, transmitting the print format from the headset to the printer, and setting the print format as a print format of the printer; and transmitting the selected data from the mobile terminal to the headset and printing the data received through the headset using the printer with the set format.

### BRIEF DESCRIPTION OF THE DRAWINGS

The above and other objects, features and advantages of the present invention will be more apparent from the following detailed description in conjunction with the accompanying drawings, in which:
FIG. 1 illustrates a system for controlling a printer using a Bluetooth function of a mobile terminal according to an exemplary embodiment of the present invention;
FIG. 2 is a block diagram illustrating a configuration of an apparatus for controlling a printer using a Bluetooth function of a mobile terminal according to an exemplary embodiment of the present invention;
FIG. 3 is a message flow diagram illustrating an operation of registering a printer connected to a headset performing a Bluetooth dongle function in a mobile terminal according to an exemplary embodiment of the present invention; and
FIG. 4 is a message flow diagram illustrating a method of controlling a printer using a Bluetooth function of a mobile terminal according to an exemplary embodiment of the present invention.

### DETAILED DESCRIPTION OF PREFERRED EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

While the present invention may be embodied in many different forms, specific embodiments of the present invention are shown in drawings and are described herein in detail, with the understanding that the present disclosure is to be considered as an exemplification of the principles of the invention and is not limited to the specific embodiments illustrated.

The mobile terminal according to an exemplary embodiment of the present invention may be any information communication appliance that can perform Bluetooth communication, such as a mobile communication terminal, mobile phone, Personal Digital Assistant (PDA), smart phone, notebook computer, and multimedia appliances, and applications thereof.

Further, in the present invention, a headset that has a Bluetooth function and can perform a dongle function is exemplified.

The dongle function is used for assisting other appliances in which a Bluetooth function is not provided to perform a Bluetooth function. The headset may be any appliance that has a Bluetooth function, such as an ear set, headphone, or stereo headset, and can perform a dongle function and applications thereof.

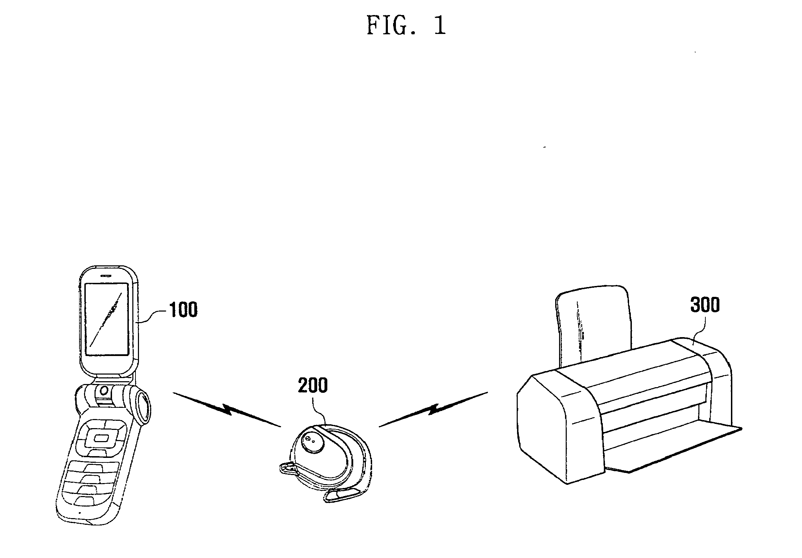

Referring to FIG. 1, the system includes a mobile terminal 100, headset 200, and printer 300.

The mobile terminal 100 establishes a Bluetooth communication link with the headset 200, and the headset 200 establishes a USB communication link with the printer 300. The headset 200 includes a Bluetooth module for forming a Bluetooth communication link with the mobile terminal 100. Further, the headset 200 includes a USB connector for forming the USB communication link with the printer 300 and a USB control module for performing USB communication.

The printer 300 includes a USB port for forming the USB communication link with the headset 200.

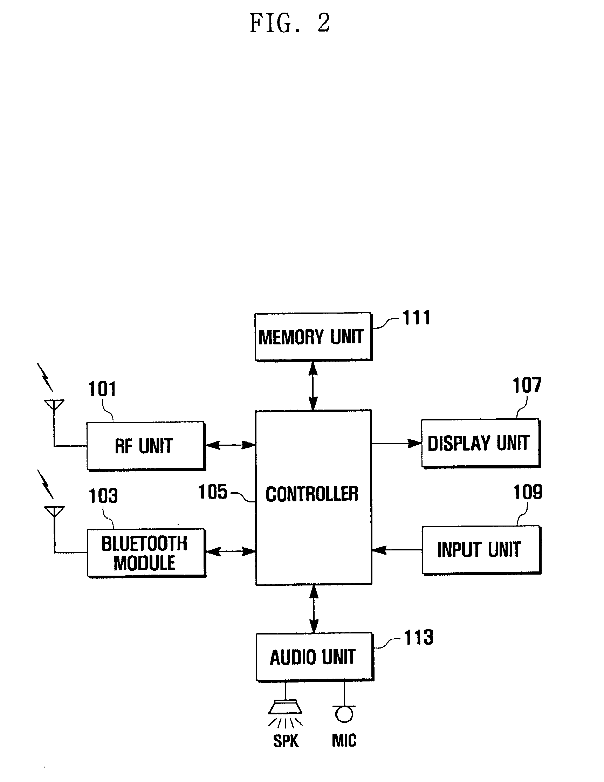

As shown in FIG. 2, the mobile terminal 100 includes a Radio Frequency (RF) unit 101, Bluetooth module 103, controller 105, display unit 107, input unit 109, memory unit 111, and audio unit 113.

The RF unit 101 performs general wireless communication between the mobile terminal 100 and a mobile communication network. For example, the RF unit 101 transmits and receives voice data, transmission and reception of a character messages, and multi media messages through the mobile communication network.

The Bluetooth module 103 performs Bluetooth communication with other Bluetooth devices through a Bluetooth antenna according to Bluetooth protocol. Particularly, the Bluetooth module 103 stores a host stack necessary for Bluetooth communication, a Bluetooth profile that can be selected according to a function or condition of an external Bluetooth device to be a communication target, an application program, etc. Further, an Object Push Profile (OPP) and Basic Printer Profile (BPP) are stored in the Bluetooth profile. The OPP is a profile necessary for performing object exchange or file transfer, and the BPP is a profile necessary for controlling a printer.

The controller 105 controls the general operation of the mobile terminal 100. Particularly, the controller 105 includes a modem and codec having a transmitter for encoding and modulating a signal for transmission from the RF unit 101 and a receiver for demodulating and decoding a received signal.

The controller 105 determines whether an intrinsic number of the printer 300 received from the Bluetooth module of the headset 200 is identical to an intrinsic number stored in the memory unit 111, and if an intrinsic number of the printer 300 received from the Bluetooth module of the headset 200 is not identical to an intrinsic number stored in the memory unit 111, the controller 105 stores the intrinsic number in the memory unit 111. The controller 105 can recognize that a device connected to the headset 200 is the printer 300 by utilizing the intrinsic number.

Further, the controller 105 controls the Bluetooth module 103 to transmit data to print and a set print format to the headset 200. The controller 105 determines whether transmission of the data to print is completed through the Bluetooth module 103. The print format includes a size of a paper for performing the print, a print resolution, and the number of copies.

The display unit 107 displays a series of operation states, an operation result, and information performed in the mobile terminal 100 by the control of the controller 105. The display unit 107 is composed of a display device such as Liquid Crystal Display (LCD), Organic Light Emitting Diodes (OLED), and Plasma Display Panel (PDP). Particularly, the display unit 107 displays, if data to print of the mobile terminal 100 are transmitted to the headset 200 by the control of the controller 105, a message of data transmission completion.

The input unit 109 includes a general keypad, for example, a touch screen, touch pad, or scroll wheel. The input unit 109 receives a manipulation signal for controlling the operation of the mobile terminal 100 and provides the manipulation signal to the controller 105.

The memory unit 111 stores information (e.g. information about a setting state and menu) related to the operation of the mobile terminal 100 by the control of the controller 105. Particularly, the memory unit 111 stores an intrinsic number of the printer 300 received from the Bluetooth module of the headset 200 as controlled by the controller 105. Further, the memory unit 111 stores a set print format, a size of a paper for performing the print, a print resolution, and the number of copies.

The audio unit 113 converts an analog audio signal input through a microphone (MIC) to a digital audio signal and plays a converted digital audio signal output from the controller 105 through a speaker (SPK).

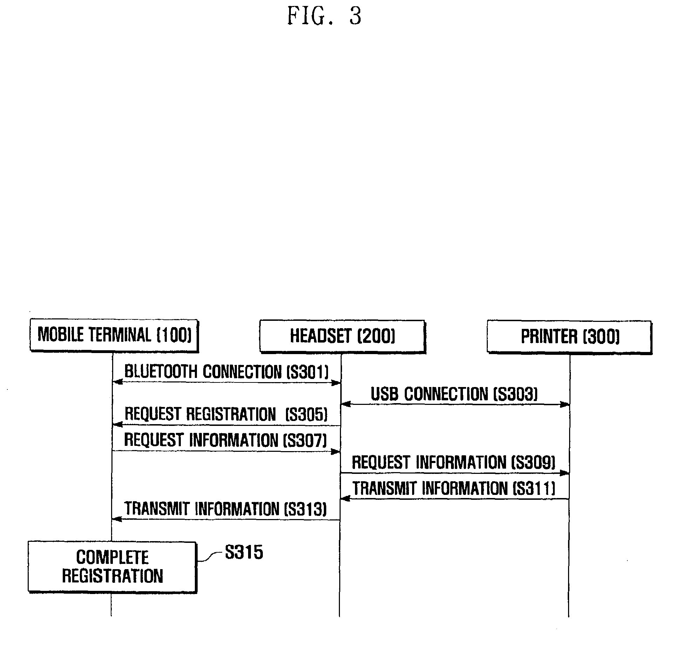

Referring to FIG. 3, a Bluetooth communication link is formed between the mobile terminal 100 and headset 200 in Step 301, and a USB communication link is formed between the headset 200 and the printer 300 in Step 303). The connection order of Steps 301 and 303 may be reversed without any difficulty in executing the present invention. The USB communication link between the headset 200 and the printer 300 is composed of a wired or wireless USB device.

After connecting the mobile terminal 100 and headset 200 with Bluetooth communication at Step 301 and the headset 200 and printer 300 with USB communication at Step 303, the mobile terminal 100 receives a registration request initiated by the headset 200 for registration of the printer 300 in Step 305.

Thereafter, the mobile terminal 100 transmits a request instruction of an intrinsic number of the printer 300 connected to the headset 200 to the headset 200 in Step 307, and the headset 200 forwards the intrinsic number request instruction of the printer 300 received from the mobile terminal 100 to the printer 300 in Step 309. The printer 300 then transmits an intrinsic number to the headset 200 according to the intrinsic number request instruction transmitted from the headset 200 in Step 311, and the headset 200 forwards the intrinsic number received from the printer 300 to the mobile terminal 100 in Step 313.

The mobile terminal 100 stores the received intrinsic number of the printer 300 in the memory unit 111 and registers the printer 300 connected to the headset 200 in order to control the printer 300 connected with a USB connector to the headset 200 in Step 315.

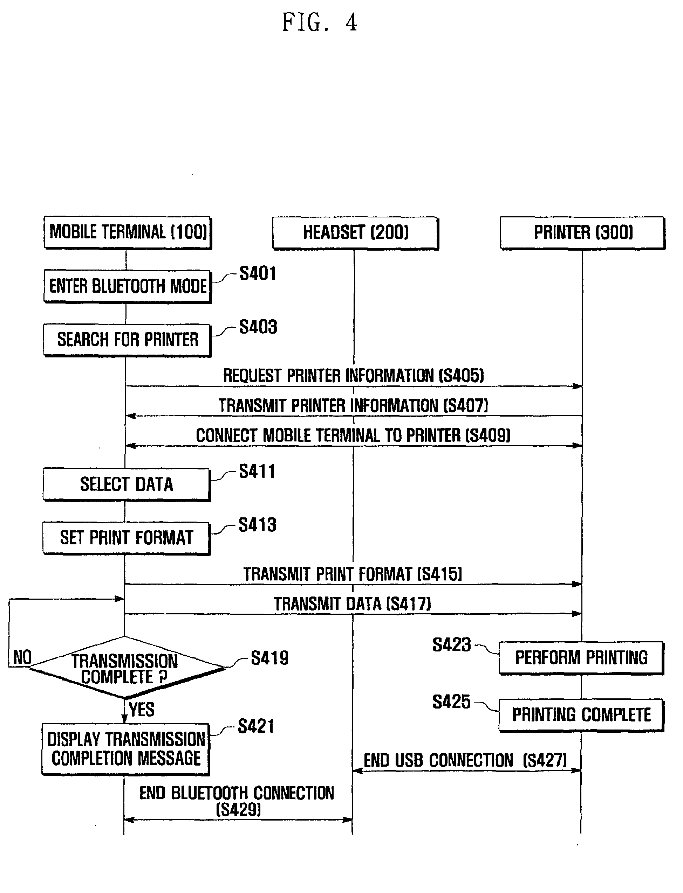

Referring to FIG. 4, an exemplary embodiment of the present invention is described using the mobile terminal 100, headset 200, and printer 300.

The mobile terminal 100 enters a Bluetooth mode in Step 401, and the controller 105 searches for the printer 300 for performing the printing using an intrinsic number of the printer 300 stored in the memory unit 111 in Step 403.

Upon finding the printer 300 for performing the printing, the controller 105 transmits a request for the intrinsic number of the printer 300 to the headset 200, which forwards the request for the intrinsic number to the printer 300 in Step 405. The printer 300 transmits the intrinsic number to the headset 200 according to the request for the intrinsic number, and the headset 200 transmits the intrinsic number received from the printer 300 to the mobile terminal 100 in Step 407.

Thereafter, the controller 105 determines whether the intrinsic number is the registered number of the printer 300 as described in FIG. 3, and if the intrinsic number is stored in the memory unit 111 as the registered number of the printer 300, the controller 105 connects the mobile terminal 100 to the printer 300 in Step S409. If the intrinsic number is not stored in the memory unit 111 as the registered number of the printer 300, the memory unit 111 stores the received intrinsic number of the printer 300, according to Step 315, and the controller 105 then performs Step409.

Next, the mobile terminal 100 selects data to print in Step411. Although in this exemplary embodiment Step 411 is performed after Steps 401 to 409, in another embodiment, the order of the steps may be changed by performing first Step 411 and then performing Steps 401 to 409 without any difficulty in executing the present invention.

The mobile terminal 100 sets a print format for data to print in Step 413), and the mobile terminal 100 transmits the print format to the headset 200, which forwards the transmitted print format to the printer 300 in Step 415. The printer 300 sets the print format to the print format received from the headset 200. The print format includes a size of a paper for performing the printing, a print resolution and the number of copies.

The controller 105 then transmits the data selected at Step 411 through the Bluetooth module 103 to the headset 200, which forwards the transmitted data to the printer 300 in Step 417.

The controller 105 determines whether transmission of the data selected at Step 411 is complete in Step 419,and, if transmission of the data selected at Step 411 is complete, the controller 105 controls the display unit 107 to display a data transmission completion message in Step 421.

Upon receiving the data transmission, at Step 423 the printer 300 prints the data transmitted at Step417 with the print format set at Step 415 , and, if the printing is complete in Step 425, a USB communication link formed between the headset 200 and printer 300 is ended in Step 427.

Thereafter, the controller 105 ends a Bluetooth communication link formed between the mobile terminal 100 and headset 200 in Step 429. Although in this exemplary embodiment Step 429 is performed after Step 427, the order of Steps 427 and 429 may be reversed, without any difficulty in executing the present invention.

As described above, according to the present invention, a Bluetooth function of a mobile terminal can be extended by enabling a mobile terminal for performing Bluetooth communication to control a printer in which a Bluetooth module is not provided.

Further, a function of a headset can be extended by enabling the headset to perform a Bluetooth dongle function through providing a USB connector in the headset that can perform Bluetooth communication.

Further, the mobile terminal can control the printer by enabling the mobile terminal and the printer to perform Bluetooth communication through connecting the headset for performing a Bluetooth dongle function to the printer.

Although exemplary embodiments of the present invention have been described in detail hereinabove, it should be clearly understood that many variations and modifications of the basic inventive concepts herein taught that may appear to those skilled in the present art will still fall within the spirit and scope of the present invention, as defined in the appended claims.

## Claims

1. A method of controlling a printer using a Bluetooth function of a mobile terminal, the method comprising:
forming a Bluetooth communication link between a mobile terminal having a Bluetooth communication function and a printer to which a headset for performing a dongle function is connected;
selecting data to be printed;
setting a print format for the selected data and transmitting the print format to the headset for transmission of the print format to the printer; and
transmitting the selected data to the headset for transmission of the selected data to the printer.

2. The method of claim 1, further comprising searching for a printer to which a headset for performing Bluetooth communication is connected when the mobile terminal enters a Bluetooth communication mode.

3. The method of claim 2, further comprising requesting an intrinsic number of the searched printer.

4. The method of claim 3, further comprising receiving the requested intrinsic number of the printer through the headset.

5. The method of claim 4, further comprising:
determining whether the received intrinsic number of the printer is registered; and
registering, if the received intrinsic number of the printer is not registered, the received intrinsic number of the printer.

6. The method of claim 1, further comprising determining whether transmission of the selected data is complete.

7. The method of claim 6, further comprising displaying, if transmission of the selected data is complete, a transmission completion message for informing that transmission of the selected data is complete.

8. The method of claim 1, wherein the print format comprises a size of a paper for performing the printing, a print resolution, and a number of copies.

9. A method of controlling a printer using a Bluetooth function of a mobile terminal, the method comprising:
selecting data to be printed;
forming a Bluetooth communication link between a mobile terminal having a Bluetooth communication function and a printer to which a headset for performing a dongle function is connected;
setting a print format for the selected data and transmitting the print format to the headset for transmission of the print format to the printer; and
transmitting the selected data to the headset for transmission of the selected data to the printer.

10. The method of claim 9, further comprising searching for a printer to which a headset for performing Bluetooth communication is connected when the mobile terminal enters a Bluetooth communication mode.

11. The method of claim 10, further comprising requesting an intrinsic number of the searched printer.

12. The method of claim 11, further comprising receiving the requested intrinsic number of the printer through the headset.

13. The method of claim 12, further comprising:
determining whether the received intrinsic number of the printer is registered; and
registering, if the received intrinsic number of the printer is not registered, the received intrinsic number of the printer.

14. The method of claim 9, further comprising determining whether transmission of the selected data is completed.

15. The method of claim 14, further comprising displaying, if transmission of the selected data is complete, a transmission completion message for informing that transmission of the selected data is complete.

16. The method of claim 9, wherein the print format comprises a size of a paper for performing the printing, a print resolution, and a number of copies.

17. A method of controlling a printer using a Bluetooth function of a mobile terminal, the method comprising:
forming, when printing is to be performed, a Bluetooth communication link between the mobile terminal and a headset, and forming a communication link between the headset and the printer;
selecting data to be printed, using the mobile terminal;
setting a print format, using the mobile terminal, transmitting the print format to the headset, transmitting the print format from the headset to the printer, and setting the print format as a print format of the printer; and
transmitting the selected data from the mobile terminal to the headset and printing the data received through the headset using the printer with the set format.

18. The method of claim 17, further comprising receiving a registration request of the printer from the headset by the mobile terminal;
requesting, by the mobile terminal, an intrinsic number of the printer connected to the headset and sending the request for the intrinsic number of the printer by the headset to the printer;
transmitting the intrinsic number from the printer to the headset according to the request from the headset and transmitting the intrinsic number transmitted by the printer from the headset to the mobile terminal; and
registering the transmitted intrinsic number of the printer in the mobile terminal.

19. The method of claim 17, further comprising ending the Bluetooth communication link between the mobile terminal and the headset.

20. The method of claim 17, further comprising ending the communication link between the headset and the printer.

21. The method of claim 17, wherein the communication link is one of a wired connection and a wireless connection.

22. The method of claim 17, wherein the print format comprises a size of a paper for performing the printing, a print resolution, and a number of copies.
